# EUROPEAN PATENT SPECIFICATION

(11) **EP 2 869 113 B1**
(45) Date of publication and mention of the grant of the patent: **03.08.2016**
(21) Application number: 13809515.3
(22) Date of filing: 06.06.2013
(51) Int. Cl.: G02B 27/01, B60K 35/00

(54) **VEHICLE DISPLAY DEVICE**
GAHRZEUGANZEIGEVORRICHTUNG
DISPOSITIF D'AFFICHAGE POUR VÉHICULE

(30) Priority: 29.06.2012 JP 2012148007
(43) Date of publication of application: 06.05.2015
(73) Proprietor: JVC KENWOOD Corporation, Kanagawa 221-0022 (JP)
(72) Inventor: TOHDA, Motoshi, Yokohama-shi Kanagawa 221-0022 (JP); KANENO, Isao, Yokohama-shi Kanagawa 221-0022 (JP); TANAKA, Yuji, Yokohama-shi Kanagawa 221-0022 (JP); SATO, Tatsuya, Yokohama-shi Kanagawa 221-0022 (JP); KOBAYASHI, Tatsuru, Yokohama-shi Kanagawa 221-0022 (JP); KOBAYASHI, Manabu, Yokohama-shi Kanagawa 221-0022 (JP)
(74) Representative: Carstens, Dirk Wilhelm
(86) International application number: PCT/JP2013/003581
(87) International publication number: WO 2014/002401

(56) References cited:
- JP-A- 2011 156 895
- JP-A- 2012 071 825
- US-A1- 2005 157 398

## Description

### [TECHNICAL FIELD]

The present invention relates to a display device for a vehicle.

### [BACKGROUND ART]

Display devices for vehicles called head up displays are known. Head up displays are display devices that display information while overlapping the information on a landscape outside a vehicle by using an optical element called a combiner that allows light entering from outside the vehicle to pass through and that reflects an image projected from an optical unit placed inside the vehicle. Head up displays have received attention as display devices for vehicles in recent years since head up displays allow a driver visually recognizing a view outside a vehicle to recognize information of an image projected from an optical unit almost without changing the line of sight or a focus.

Patent document No. 1 discloses adjusting a visually-recognizable space by using an X-axis stage, a Z-axis stage, and a rotation stage in a head up display that is mounted on a dashboard of a vehicle.

### [RELATED ART LIST]

### [Patent Document]

[Patent document No. 1] JP 10 278629 A.
[Patent document No. 2]US 2005/157398 A1.

### [DISCLOSURE OF THE INVENTION]

Modes disclosed by Patent document No . 1 are considered to be valid for adjusting a visually-recognizable space at a given attachment position.

A position and a space where a head up display can be attached in a vehicle are limited, and the position of a projection port for projecting an image and the direction of projection may not be arranged properly depending on a position for attachment.

In this background, a purpose of the present invention is to provide a display device for a vehicle that allows for changes in the position of a projection port for projecting an image onto a combiner.

A display device for a vehicle according to the present invention is a display device for a vehicle including: a substrate housing portion that stores a circuit substrate that outputs an image signal of an image to be displayed; an optical unit that is provided at one end of the substrate housing portion and that generates and projects an image based on the image signal output from the circuit substrate; and a combiner that is provided at one end of the optical unit and on which the image is projected, wherein the optical unit has : an optical unit main body that includes a light source and an image display element; and a projection unit that is attached to the optical unit main body, that includes a projection mirror and an intermediate image screen that forms a real image, and that determines a projection direction, wherein the optical unit main body has a first main body surface and a second main body surface, which is a surface facing the first main body surface, and wherein the projection unit has two arrangement states: a first state where a projection port of the projection unit is on the side of the first main body surface; and a second state where the projection port is on the side of the second main body surface.

A display device for a vehicle according to the present invention allows for changes in the position of a projection port for projecting an image onto a combiner.

### [BRIEF DESCRIPTION OF THE DRAWINGS]

Fig. 1 is a perspective view of a head up display, which is a display device for a vehicle according to the present invention, shown by means of a field of view from the inside of the vehicle;
Fig. 2 is a perspective view of the head up display in Fig. 1 shown by means of a field of view from the side of a windshield;
Fig. 3 is a diagram illustrating the internal configuration of an optical unit along with an optical path;
Fig. 4 is a diagram illustrating the internal configuration of the optical unit along with an optical path;
Fig. 5 is a diagram illustrating a part of the inside of the optical unit and a part of the inside of a substrate housing portion;
Fig. 6 is a diagram illustrating a state where a heat sink and a flexible cable are removed in Fig. 5;
Fig. 7 is a lateral view of the head up display attached to a rear-view mirror;
Fig. 8 is a front view of the head up display attached to the rear-view mirror;
Fig. 9 is a diagram illustrating a visually recognizable region of an image (virtual image) projected onto a combiner;
Fig. 10 is a diagram illustrating a visually recognizable region of an image (virtual image) projected onto the combiner;
Fig. 11 is a diagram illustrating a state where a projection unit and a combiner are removed in a head up display attached for a right steering wheel vehicle;
Fig. 12 is a diagram illustrating a state when a substrate housing portion is replaced for a left steering wheel vehicle;
Fig. 13 is a diagram illustrating a head up display replaced for a left steering wheel vehicle;
Fig. 14 is a perspective view showing an attachment member for attaching a substrate housing portion to a rear-view mirror;
Fig. 15 is a trihedral figure of an attachment plate of the attachment member shown in Fig. 14;
Fig. 16 is a perspective view showing a head up display attached to a rear-view mirror;
Fig. 17 is a cross-sectional view of a setscrew portion when a first attachment surface of a substrate housing portion is attached such that the first attachment surface is in contact with an attachment plate;
Fig. 18 is a cross-sectional view of a setscrew portion when a second attachment surface of a substrate housing portion is attached such that the second attachment surface is in contact with an attachment plate;
Fig. 19 is a diagram illustrating an exemplary variation of the attachment plate;
Fig. 20 is a lateral view showing a state where a combiner is folded by a storage hinge; and
Fig. 21 is a front view showing a state where the combiner is folded by the storage hinge.

### [BEST MODE FOR CARRYING OUT THE INVENTION]

Described below is an explanation of the embodiments of the present invention with reference to figures. Specific numerical values and the like shown in the embodiments are shown merely for illustrative purposes to facilitate understanding of the invention and do not intend to limit the scope of the present invention, unless otherwise noted. In the subject specification and figures, elements having substantially the same functions and structures shall be denoted by the same reference numerals, and duplicative explanations will be omitted appropriately. Also, the illustration of elements that are not directly related to the present invention is omitted.

[Exterior configuration of display device for vehicle according to present embodiment]

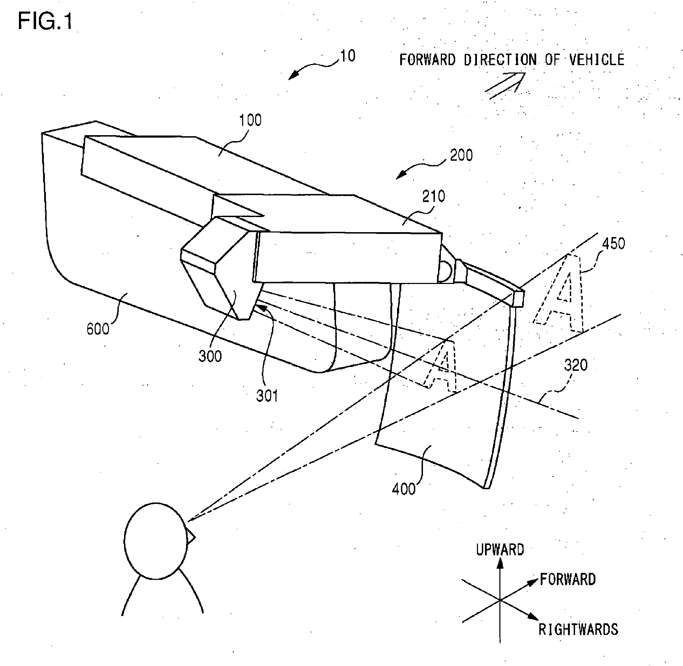

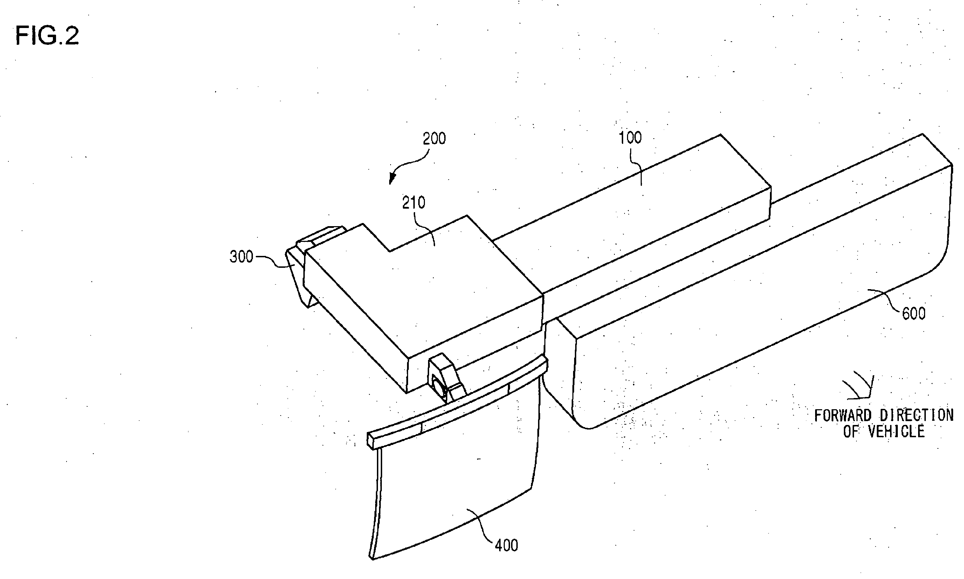

Using a head up display attached to a rear-view mirror provided to a vehicle as an example for a display device for a vehicle according to the present embodiment, an explanation is given regarding the exterior configuration of the display device for a vehicle in reference to Figs. 1 and 2. Fig. 1 is a perspective view of a head up display 10 according to the present embodiment observed by means of a field of view directed from a rear-view mirror 600, to which this head up display 10 is attached, to a windshield (not shown) of a vehicle.

Fig. 2 is a perspective view of the head up display 10 observed by means of a field of view directed from the windshield (not shown) to the rear-view mirror 600. In the following explanations, directions that are shown as forward, backward, leftward, rightward, upward, and downward mean a forward direction, a backward direction, a leftward direction, a rightward direction, a direction that is vertical to a road surface on which a vehicle is placed and that is directed from the surface to the vehicle, and a direction that is opposite to the direction, respectively.

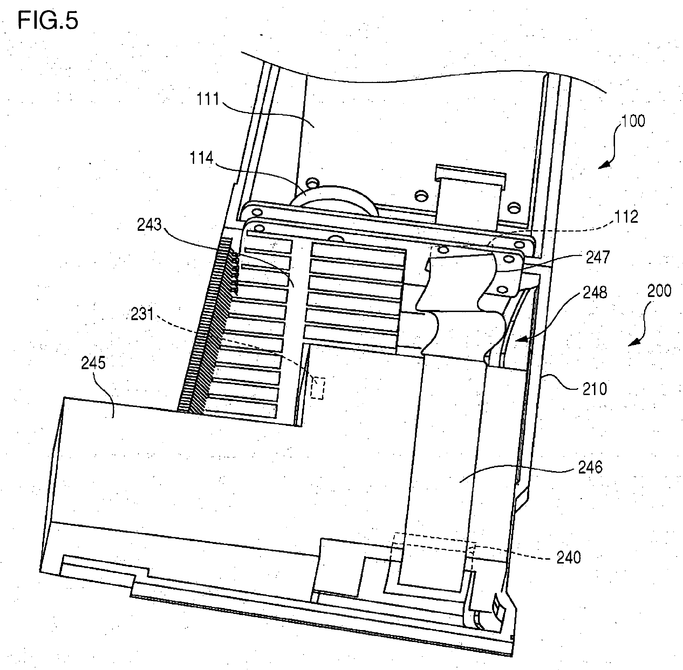

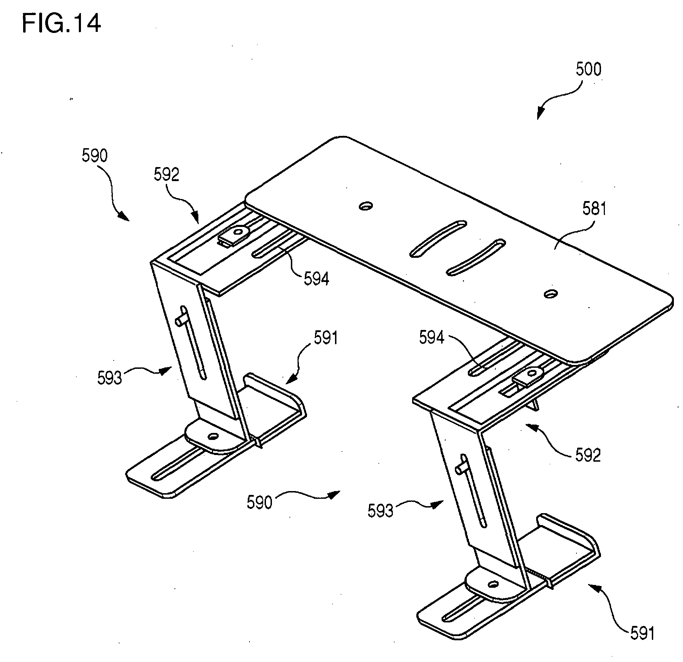

The headupdisplay 10 generates an image signal related to an image displayed on a combiner 400 as a virtual image and is provided with a substrate housing portion 100 housing a circuit substrate 111 (see Fig. 5) that outputs the generated image signal to an optical unit 200. An image signal output from an external device (not shown) such as a navigation device, a media reproduction device, or the like is input to the circuit substrate 111, and the circuit substrate 111 is also capable of outputting the image signal to the optical unit 200 after performing a predetermined process on the signal that has been input. This substrate housing portion 100 is connected to an attachment member 500 described later (see Fig. 14), which is one of constituting elements of the head up display 10, and the rear-view mirror 600 is held by the attachment member 500. Thereby, the head up display 10 is attached to the rear-view mirror 600. Details will be described later regarding each of mechanisms related to the connection of the substrate housing portion 100 and the attachment member 500 and to the holding of the rear-view mirror 600 by the attachment member 500. Also, in order to facilitate explanations and understanding of the entire configuration of the head up display 10, the descriptions of the attachment member 500 are omitted in Figs. 1 and 2.

The head up display 10 is provided with the optical unit 200 to which an image signal output from the circuit substrate 111 is input. The optical unit 200 is provided with an optical unit main body 210 and a projection unit 300. The optical unit main body 210 houses a light source 231 and an image display element 240, which are described later, various optical lenses, and the like. The projection unit 300 houses various projection mirrors and an intermediate image screen 360, which are described later. An image signal output by the circuit substrate 111 is projected from a projection port 301 as image display light on the combiner 400 having a concave shape via each of the devices of the optical unit main body 210 and each of the devices of the projection unit 300. In the present embodiment, a case where a liquid crystal on silicon (LCOS), which is a reflection type liquid crystal display panel, is used as the image display element 240 is illustrated for example. However, a digital micromirror device (DMD) may be used as the image display element 240. In that case, the DMD is assumed to be formed by an optical system and a drive circuit according to a display element to which the DMD is applied.

A user, who is a driver, recognizes projected image display light as a virtual image via the combiner 400. In Fig. 1, the projection unit 300 is projecting image display light of a letter "A" on the combiner 400. Looking at the combiner 400, the user recognizes the letter "A" in such a manner as if the letter were displayed, for example, 1.7 m to 2.0 m ahead (in a forward direction of the vehicle). In other words, the user can recognize a virtual image 450. In this case, a central axis of the image display light projected on the combiner 400 from the projection unit 300 is defined as a projection axis 320.

The optical unit 200 is configured such that the optical unit 200 is rotatable with respect to the substrate housing portion 100. A detailed explanation thereof will be described later. Further, the head up display 10 according to the present embodiment is configured such that the projection unit 300 and the combiner 400 are changeable in attachment direction with respect to a predetermined surface of the optical unit main body 210 and are detachable.

[Internal configuration of display device for vehicle according to present embodiment: Optical system]

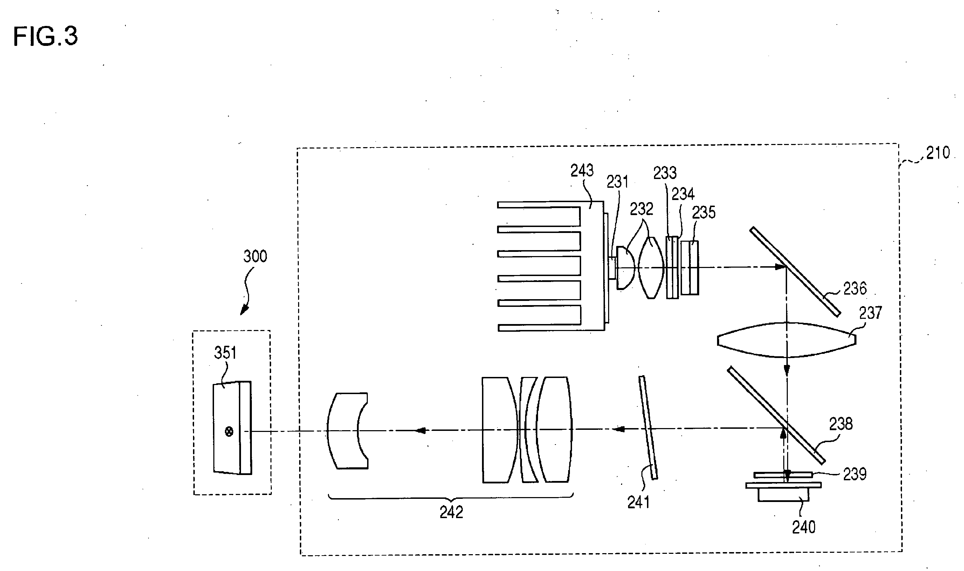

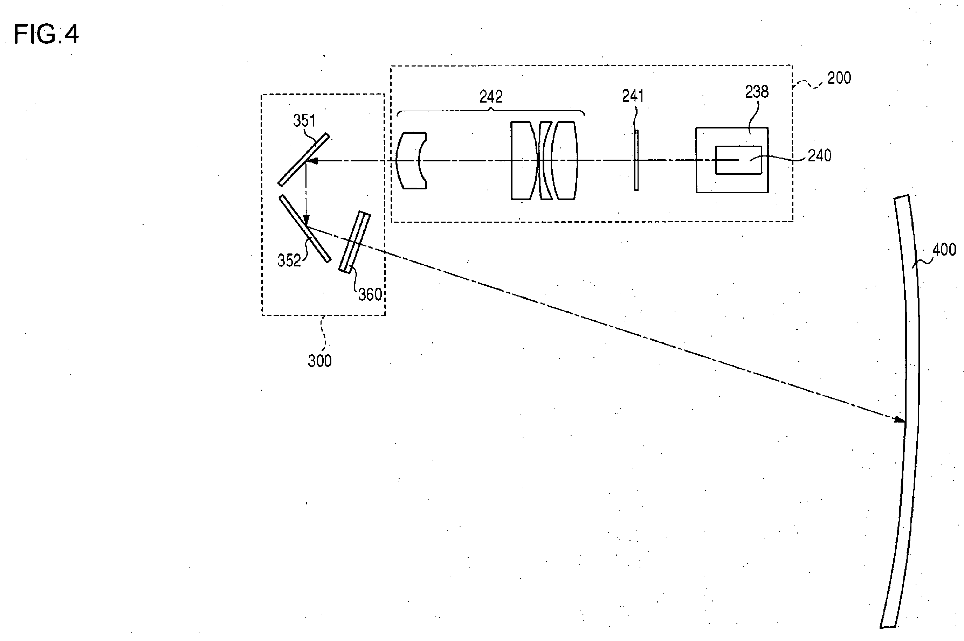

An explanation is now given regarding the internal configuration of the head up display 10 . Figs . 3 and 4 are diagrams for explaining the internal configuration of the optical unit 200 of the head up display 10 described above. Fig. 3 is a diagram illustrating the internal configuration of the optical unit main body 210 and a part of the internal configuration of the projection unit 300 along with an optical path related to image display light. Fig. 4 is a diagram illustrating the internal configuration of the projection unit 300 and a part of the internal configuration of the optical unit main body 210 along with an optical path related to image display light projected onto the combiner 400.

In reference to Fig. 3, an explanation is given regarding the internal configuration of the optical unit main body 210 and an optical path related to image display light. The optical unit main body 210 is provided with a light source 231, a collimate lens 232, a UV-IR (UltraViolet-Infrared Ray) cut filter 233, a polarizer 234, a fly-eye lens 235, a reflecting mirror 236, afield lens 237, a wire grid polarization beam splitter 238, quarter-wave plate 239, an analyzer 241, a projection lens group 242, and a heat sink 243.

The light source 231 consists of a light-emitting diode that emits white light or light in three colors: blue, green, and red. The heat sink 243 for cooling heat generated along with emission of light is attached to the light source 231. Light emitted by the light source 231 is changed to parallel light by the collimate lens 232. The UV-IR cut filter 233 absorbs and removes ultraviolet light and infrared light from the parallel light passed through the collimate lens 232. The polarizer 234 changes light that has passed through the UV-IR cut filter 233 to P-polarized light without disturbance. The fly-eye lens 235 then adjusts the brightness of light that has passed through the polarizer 234 to be uniform.

The reflecting mirror 236 changes the optical path of light that has passed through each cell of the fly-eye lens 235 by 90 degrees. Light reflected by the reflecting mirror 236 is collected by the field lens 237. Light collected by the field lens 237 is radiated to the image display element 240 via the wire grid polarization beam splitter 238 and quarter-wave plate 239 that transmit P-polarized light.

The image display element 240 is provided with a color filter of a red color, a green color, or a blue color for each pixel. The light radiated to the image display element 240 is changed to a color that corresponds to each pixel, modulated by a liquid crystal composition provided on the image display element 240, and emitted toward the wire grid polarization beam splitter 238 while being S-polarized image display light. The emitted S-polarized light is reflected by the wire grid polarization beam splitter 238 and enters the projection lens group 242 after changing the optical path and passing through the analyzer 241.

The image display light transmitted through the projection lens group 242 exits the optical unit main body 210 and enters the projection unit 300. A first projection mirror 351 provided on the projection unit 300 then changes the optical path of the entering image display light.

Subsequently, in reference to Fig. 4, an explanation is given regarding the internal configuration of the projection unit 300 and an optical path related to image display light. The projection unit 300 is provided with the first projection mirror 351, a second projection mirror 352, and the intermediate image screen 360.

As described above, the optical path of the image display light that has passed through the wire grid polarization beam splitter 238, the analyzer 241, and the projection lens group 242 provided in the optical unit main body 210 is changed to an optical path heading toward the combiner 400 by the first projection mirror 351 and the second projection mirror 352 . In the meantime, a real image based on the image display light reflected by the second projection mirror 352 is formed on the intermediate image screen 360. The image display light related to the real image formed on the intermediate image screen 360 is transmitted through the intermediate image screen 360 and projected on the combiner 400. As described above, the user recognizes a virtual image related to this projected image display light in the forward direction via the combiner 400.

An internal configuration such as the one described above allows for the user to visually recognize a virtual image based on an image signal output from the circuit substrate 111 while overlapping the virtual image on the real landscape via the combiner 400.

[Internal configuration of display device for vehicle according to present embodiment: Details of internal configuration of optical unit 200]

The optical unit 200 is configured such that the optical unit 200 is rotatable with respect to the substrate housing portion 100. Subsequently, in reference to Fig. 5, a detailed description is made regarding the internal configuration of the optical unit 200 and the substrate housing portion 100, mainly regarding an area near a part where the optical unit 200 and the substrate housing portion 100 are connected.

Fig. 5 is a diagram illustrating a part of the inside of the optical unit 200 and a part of the inside of the substrate housing portion 100. In Fig. 5, the area near the part where the optical unit 200 and the substrate housing portion 100 are connected is mainly shown. An optical system placement unit 245 provided in the optical unit 200 houses various devices except for the above-described heat sink 243. The heat sink 243 and a space 248 are provided inside the optical unit 200 near the part where the optical unit 200 is connected to the substrate housing portion 100 on the side of the substrate housing portion 100 of the optical system placement unit 245.

The circuit substrate 111 electrically controls the image display element 240 and the light source 231 housed in the optical system placement unit 245. The circuit substrate 111 and the image display element 240 housed in the optical systemplacement unit 245 are connected through a flexible cable 246, which is a wiring. The flexible cable 246 is shown as an example in the figure, and a wiring that transmits an electrical signal of a flexible substrate or the like can be used. In the optical unit 200, an optical unit side opening 247 is formed on a surface of a housing of the optical unit 200. In the substrate housing portion 100, a substrate housing side opening 112 is formed on a surface of a housing of the substrate housing portion 100 . The flexible cable 246 connects the circuit substrate 111 and the image display element 240 through the optical unit side opening 247 and the substrate housing side opening 112. The flexible cable 246 preferably has a length that allows the substrate housing portion 100 and the optical unit 200 to rotate freely.

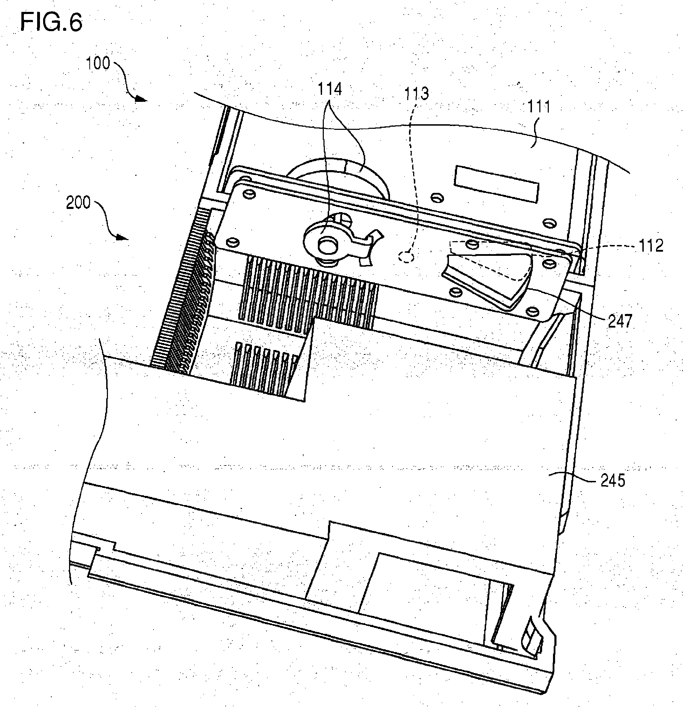

Fig. 6 is a diagram illustrating a state where the above-stated heat sink 243 and the flexible cable 246 are removed regarding the part of the inside of the optical unit 200 and the part of the inside of the substrate housing portion 100 shown in Fig. 5.

The optical unit side opening 247 and the substrate housing side opening 112 each have a shape having two sides facing each other that diverge at a predetermined angle and, as an example, are formed in an approximately fan-like shape having a predetermined angle. This allows for a reduction in force applied to the flexible cable 246 by a housing relating to a surface of the optical unit 200 on which the optical unit side opening 247 is provided and by a housing relating to a surface of the substrate housing portion 100 on which the substrate housing side opening 112 is provided when the optical unit 200 is rotated with respect to the substrate housing portion 100. Therefore, breakage or cutting of the flexible cable 246 by the housings due to the rotation can be prevented.

Also, as described above, the space 248 is provided near the part where the substrate housing portion 100 is connected in the optical unit 200, and the flexible cable 246 is mainly housed by this space 248 in the optical unit 200. By providing this space 248, the length of the flexible cable can be ensured with a margin. Therefore, tension applied to the flexible cable 246 can be reduced when the optical unit 200 is rotated with respect to the substrate housing portion 100. Thus, breakage or cutting of the flexible cable 246 by the tension due to the rotation can be prevented.

The optical unit 200 and the substrate housing portion 100 are connected by a hinge 113, which is a rotating member serving as a rotation axis of the rotation of each other and a rotation lock mechanism 114, which restricts the angle range of the rotation. The optical unit 200 rotates with respect to the substrate housing portion 100 by a predetermined angle around this hinge 113. In the present embodiment, the hinge 113 is used in this case. However, another rotating member can be used.

The substrate housing side opening 112 of the substrate housing portion 100 and the optical unit side opening 247 of the optical unit 200 are formed in an approximately fan-like shape as described above. When the substrate housing portion 100 rotates with respect to the optical unit 200, an opening that is formed by both the substrate housing side opening 112 and the optical unit side opening 247 and that is for the flexible cable 246 to pass through is narrowed. However, an opening that is sufficient for the flexible cable 246 to pass through is maintained in the angle range restricted by the rotation lock mechanism 114 by the approximately fan-like shape of the substrate housing side opening 112 and the optical unit side opening 247.

The above-described shape of the substrate housing side opening 112 and the optical unit side opening 247 is shown for illustrative purposes. As long as the substrate housing side opening 112 and the optical unit side opening 247 have a shape that does not cause breakage or the like of the flexible cable 246 due to the rotation, the shape can be any form. For example, only one of the substrate housing side opening 112 and the optical unit side opening 247 may be formed in a shape having two sides facing each other that diverge at a predetermined angle such that a load is prevented from being imposed on the flexible cable 246.

As described above, the head up display 10 is configured such that the optical unit 200 and the substrate housing portion 100 are rotatable around the hinge 113. The combiner 400 is provided on the optical unit 200, and the substrate housing portion 100 is attached to the rear-view mirror 600 by the attachment member 500. By employing such a configuration described above, the user can perform adjustment of the observation angle of the rear-view mirror and adjustment of the observation angle of the combiner 400 independently from each other. Therefore, the user can adjust the visually-recognizable angle of the combiner 400 as well as adjusting the rear-view mirror 600 at an angle that allows for an area behind the vehicle to be properly checked so as to perform recognition of a proper distortionless image (virtual image).

Also, by providing the space 248 for housing the flexible cable 246 ensured with a length with a margin in the optical unit 200, rotation of the optical unit 200 with respect to the substrate housing portion 100 is achieved freely. Thereby, the user can properly adjust the respective observation angles, and breakage or cutting of the flexible cable 246 by tension due to the rotation can be prevented.

Further, by allowing the substrate housing side opening 112 and the optical unit side opening 247 of the optical unit 200 to have the above-stated approximately fan-like shape, breakage or cutting of the flexible cable 246 caused by the respective housing exterior walls of the optical unit 200 and the substrate housing portion 100 due to the rotation of the optical unit 200 with respect to the substrate housing portion 100 can be prevented, and the user can properly adjust the respective observation angles.

Also, as shown in Fig. 3, the optical path of the image display light is bent twice in the direction of 90 degrees by using the reflecting mirror 236 and the wire grid polarization beam splitter 238 in the present embodiment. The image display light is then emitted to the projection unit 300 in a direction opposite to the direction of light emission in the light source 231. By making the path of the image display light to be U-shaped in this way, the flexible cable 246 can be wired such that the flexible cable 246 and the light source 231 are not located close to each other (see Fig. 5). With this, noise caused by an electromagnetic wave generated by the light source 231 can be prevented from being mixed in an image signal, and breakage of the flexible cable 246 caused by heat generated by the light source 231 can be also prevented. Further, since the heat sink 243 installed close to the light source 231 is placed away from the flexible cable 246, the space 248 for housing the flexible cable 246 can be provided.

### [Angle adjustment using hinge]

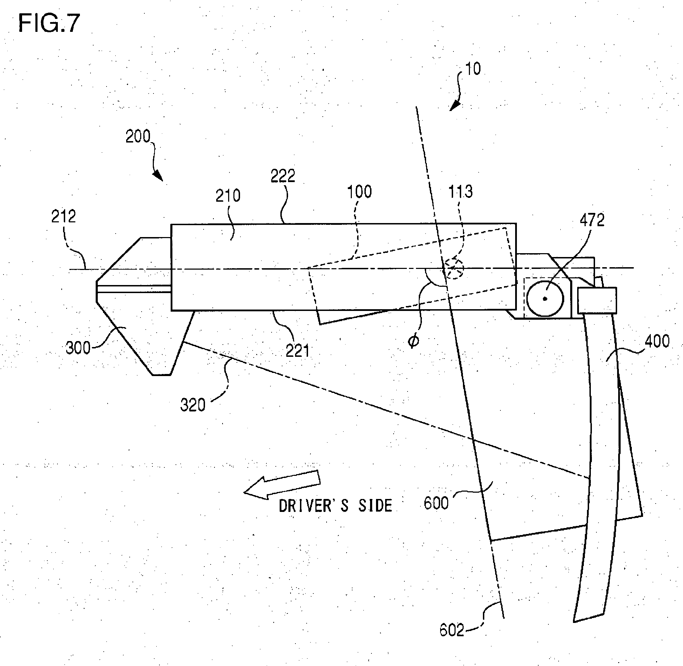

A description is given in detail regarding the rotation of the optical unit 200 with respect to the substrate housing portion 100 described above. Fig. 7 is a lateral view of the head up display 10 attached to the rear-view mirror 600. As shown in this figure, the rear-view mirror 600 is normally directed to the driver side so that the driver can visually check behind the vehicle. In other words, a driver rarely drives while a mirror surface 602 of the rear-view mirror 600 is perpendicular to a vehicle bottom surface or a traveling road surface. Normally, a driver tilts the direction of the rear-view mirror 600 so that the mirror surface 602 of the rear-view mirror 600 has an angle with respect to a surface perpendicular to the vehicle bottom surface or the like. Therefore, when the head up display 10 is attached to the rear-view mirror 600, the substrate housing portion 100 also has an angle with respect to a surface that is parallel to the vehicle bottom surface or the like in association with the inclination of the rear-view mirror 600.

As a result of performing an experiment for the recognition of a virtual image presented in many vehicles and to various users by the combiner 400, the inventor of the subject application has confirmed by the experiment that, in most cases, an angle formed by the mirror surface 602 and a reference surface 212 of the optical unit main body 210 becomes approximately 100 degrees by adjusting the respective angles of the combiner 400 and the optical unit 200 such that the combiner 400 and the optical unit 200 are located at a position where the user can recognize the virtual image without distortion when the head up display 10 is placed such that the longitudinal direction of the rear-view mirror 600 and the longitudinal direction of the substrate housing portion 100 are in the same direction.

The "reference surface" of the optical unit main body 210 in this case is an angle measurement reference surface used as a reference for measuring the inclination of the optical unit main body 210 with respect to the mirror surface 602 of the rear-view mirror 600. An example of the reference surface 212 is a plane including an optical axis of the optical unit main body 210 or a plane parallel to the plane. Another example of the reference surface 212 is a first main body surface 221, which is a lower surface when the head up display 10 is attached for a right steering wheel, or a second main body surface 222, which is a surface that is opposite to the first main body surface 221, or a plane that is parallel to those surfaces. The "reference surface" of the optical unit main body 210 may be set to be a reference surface of the optical unit 200.

In view of the above experimental result, the head up display 10 according to the embodiment is designed such that an optimal video image without distortion can be presented when the angle formed by the mirror surface 602 and the reference surface 212 is a predetermined reference angle under the condition where the head up display 10 is attached to the rear-view mirror 600 using the attachment member 500, attachment plates 571 and 581, and the like such that the longitudinal direction of the rear-view mirror 600 and the longitudinal direction of the substrate housing portion 100 are in the same direction. More specifically, an optical unit forming the optical system of the head up display 10 is designed such that an optical video image can be presented under the above-stated condition.

The "optical unit forming the optical system of the head up display 10" in this case is a system that generates and projects image display light based on an image signal output by the circuit substrate 111 housed in the substrate housing portion 100. More specifically, the system represents all or a predetermined part of the light source 231, the collimate lens 232, the UV-IR (UltraViolet-Infrared Ray) cut filter 233, the polarizer 234, the fly-eye lens 235, the reflecting mirror 236, the field lens 237, the wire grid polarization beam splitter 238, the quarter-wave plate 239, the analyzer 241, and the projection lens group 242 in the optical unit main body 210, the first projection mirror 351, the second projection mirror 352, and the intermediate image screen 360 in the projection unit 300, and the combiner 400.

Also, the "predetermined reference angle" is an angle formed by the mirror surface 602 and the reference surface 212 and an angle assumed as a standard for design at the time of the optical designing of the head up display 10. The "predetermined reference angle" may be determined by an experiment so that an optimal video image without distortion can be presented in many vehicles and to various users. An example of the predetermined reference angle is an obtuse angle and is more specifically 100 degrees. Also, the "predetermined reference angle" is shown using Ø in Fig. 7.

As described, in the head up display 10 according to the embodiment, an optical part forming an optical system is designed using, as a reference, a condition when the angle formed by the mirror surface 602 and the reference surface 212 becomes the reference angle. Thus, the optical designing is optimally achieved in accordance with the inclination of the rear-view mirror 600 that can be expected under a normal state of usage. When the head up display 10 according to the embodiment is attached such that an optimal video image without distortion can be presented in many vehicles and to various users, the optical unit 200 is held near horizontal in most cases. Since the optical unit 200 does not face the direction of the user, a feeling of oppression the user, who is the driver, has can be reduced.

The substrate housing portion 100 attached via the attachment member 500 (not shown) is fixedly installed on the rear-view mirror 600 directed to the user as described above in Fig. 7. Therefore, the same change in direction as in the rear-view mirror 600 is made to the substrate housing portion 100. On the other hand, as described above, the optical unit 200 including the projection unit 300 and the combiner 400 are rotatable in an integral manner by the hinge 113 with respect to the substrate housing portion 100. Therefore, regardless of an angle of adjustment of the rear-view mirror 600, the driver can adjust the combiner 400 to a visually-recognizable position without creating distortion in an image (virtual image) projected onto the combiner 400.

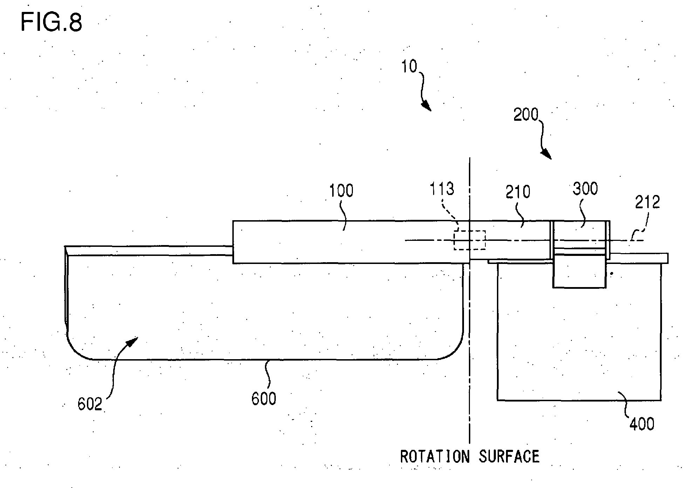

Fig. 8 is a view of the head up display 10 attached to the rear-view mirror 600 viewed by means of a field of view from the side of the mirror surface 602 of the rear-view mirror 600. As shown in the figure, a rotation surface of the hinge 113, which is a boundary surface between the substrate housing portion 100 and the optical unit 200 formed by the rotation of the hinge 113, is a surface that is perpendicular to the mirror surface 602 and that is parallel to the projection axis 320 and is therefore located at a position where the rotation surface does not cross the rear-view mirror 600. Therefore, the optical unit 200 and the combiner 400 can be rotated in an integral manner without coming into contact with the rear-view mirror 600 while the substrate housing portion 100 is fixed to the rear-view mirror 600.

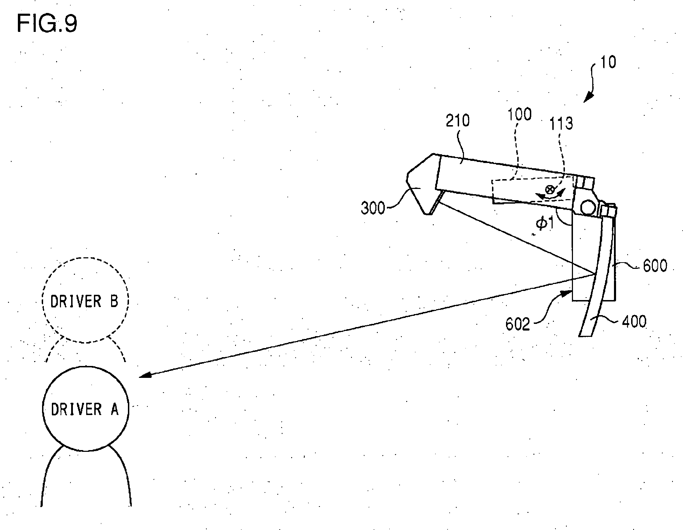

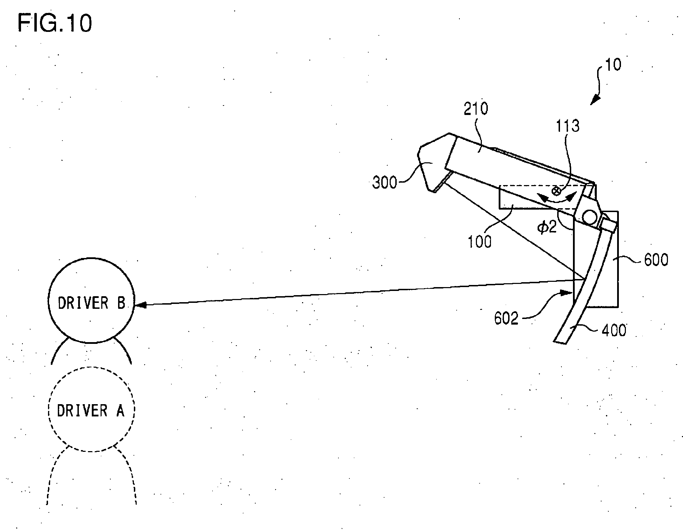

Figs. 9 and 10 are diagrams illustrating a space where an image (virtual image) projected on the combiner 400 is visually recognizable and diagrams for explaining a change in the driver's direction of observing the optical unit 200 and the combiner 400 rotated by the above-described hinge 113. For example, when a head up display 10 attached to the same vehicle is used by a driver A and a driver B whose eye level is higher than that of the driver A, an angle of adjustment by the hinge 113 made for use by the driver A is angle Ø1 as shown in Fig. 9. This angle allows the driver A to visibly recognize the image (virtual image) projected on the combiner 400 without distortion. On the other hand, an angle of adjustment by the hinge 113 made for use by the driver B is 02, which is larger than the angle Ø1, as shown in Fig. 10. This angle Ø2 allows the driver B to visually recognize the image (virtual image) projected on the combiner 400 without distortion. This rotation of the hinge 113 from the angle Ø1 to the angle Ø2 changes a position at which the image is displayed as a virtual image by the combiner 400 in a direction parallel to a straight line formed mainly by the rotation surface and the mirror surface 602 of the rear-view mirror 600.

Therefore, even when the head up display 10 according to the present embodiment is installed in a small space in a vehicle, both the projection direction of image display light from the projection unit 300 and the combiner 400 on which the image display light is projected can be adjusted in a space-saving manner. Also, since only the optical unit 200 and the combiner 400 can be moved in an integral manner without moving the entire head up display 10, a space that allows a display image to be visually recognized can be easily adjusted.

### [Rotation and detachment of combiner and projection unit]

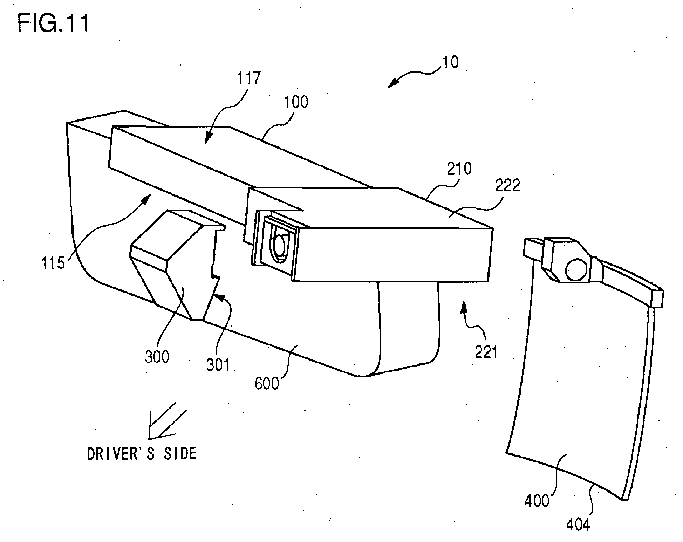

Figs. 11, 12, and 13 are diagrams for explaining a case where the head up display 10 is attached at an attachment position corresponding to a right steering wheel vehicle and a case where the head up display 10 is attached at an attachment position corresponding to a left steering wheel vehicle. Fig. 11 shows a state where the projection unit 300 and the combiner 400 are removed from the optical unit main body 210 in the head up display 10 attached to a right steering wheel vehicle. In the head up display 10 attached to a right steering wheel vehicle, the optical unit main body 210 and the combiner 400 are placed on the right side, which is a driver's side of the rear-view mirror 600, viewed from the driver. The substrate housing portion 100 has the first attachment surface 115 and the second attachment surface 117 opposite to the first attachment surface115 and is attached to the rear-view mirror 600 in a direction such that the first attachment surface 115 is in contact with the attachment member 500 (not show) . Also, the optical unit main body 210 has the first main body surface 221 on the same side as the first attachment surface 115 of the substrate housing portion 100. A surface of the optical unit main body 210 opposite to the first main body surface 221 is the second main body surface 222.

The head up display 10 shown in Fig. 11 is attached to the rear-view mirror 600 in an arrangement state where the first attachment surface 115 of the substrate housing portion 100 and the first main body surface 221 of the optical unit main body 210 are directed downward and the projection port 301 of the projection unit 300 and a lower end 404 of the combiner 400 are on the side of the first main body surface 221. Therefore, the projection axis 320 is on the side of the first main body surface 221 (see Fig. 1).

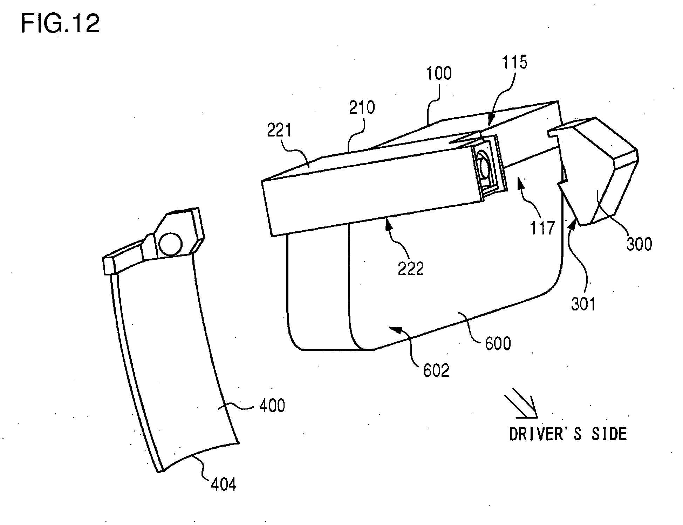

Fig. 12 illustrates the head up display 10 attached to a left steering wheel vehicle. As shown in this figure, when the head up display 10 is attached to a left steering wheel vehicle, the head up display 10 is attached to the rear-view mirror 600 in a direction such that the second attachment surface 117 is in contact with the attachment member 500 (not show) while the second attachment surface 117 of the substrate housing portion 100 is directed downward. In this case, the optical unit main body 210 and the combiner 400 are placed on the left side, which is a driver's side of the rear-view mirror 600, viewed from the driver.

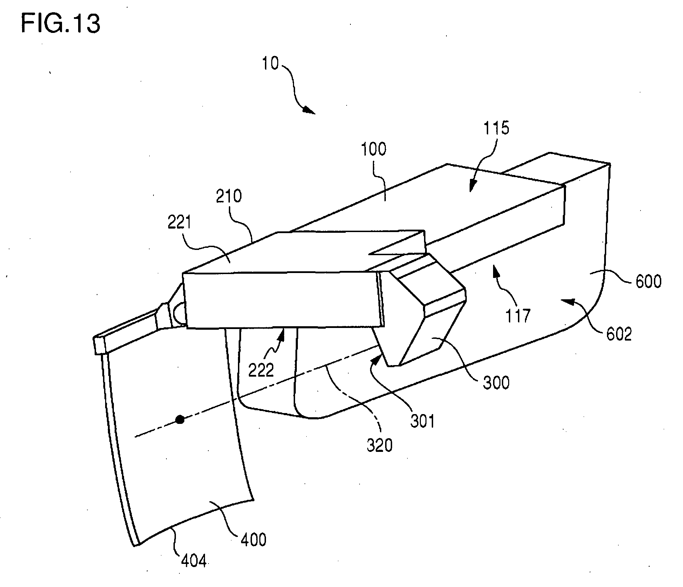

Fig. 13 is a diagram illustrating the head up display 10 attached to a left steering wheel vehicle. The head up display 10 is attached to the rear-view mirror 600 in an arrangement state where the second attachment surface 117 of the substrate housing portion 100 and the second main body surface 222 of the optical unit main body 210 are on the same downside and the projection port 301 of the projection unit 300 and the lower end 404 of the combiner 400 are on the side of the second main body surface 222.

As shown in Fig. 11 and Fig. 13, the projection unit 300 and the combiner 400 can be placed with respect to the optical unit main body 210 in either state where the projection port 301 and the lower end 404 are located on the first main body surface 221 of the optical unit main body 210 or where the projection port 301 and the lower end 404 are located on the second main body surface 222 of the optical unit main body 210. Also, as shown in Fig. 11 and Fig. 12, it is also possible to remove the projection unit 300 and the combiner 400 from the optical unit main body 210 and change the respective directions of attachment. It is also possible to connect the projection unit 300 and the combiner 400 with the optical unit main body 210 by a rotating member and change the respective directions of attachment via the rotating member (diagrammatic representation is omitted) . In other words, in the head up display 10, the projection unit 300 and the combiner 400 can be attached while the respective directions of attachment are changed with respect to the optical unit main body 210 . By changing the directions of attachment, the placement of the projection port 301 emitting image display light projected on the combiner 400 from the projection unit 300 and the projection axis 320 related to the projection direction of the image display light can be on the side of the first main body surface 221 or on the side of the second main body surface 222.

As shown in Fig. 13, even when the second attachment surface 117 is on the downside, the projection unit 300 can be placed in a state where the projection port 301 of the projection unit 300 is on the side of the second main body surface 222 of the optical unit main body 210, and image display light is thus projected downward from the optical unit main body 210. Therefore, the projection axis 320 is on the side of the second main body surface 222.

As described above, the projection unit 300 and the combiner 400 can be placed with respect to the optical unit main body 210 in either state where the projection port 301 and the lower end 404 are located on the first main body surface 221 of the optical unit main body 210 or where the projection port 301 and the lower end 404 are located on the second main body surface 222 of the optical unit main body 210. In other words, the projection unit 300 and the combiner 400 can be attached at a position where the projection port 301 of the projection unit 300 and the lower end 404 of the combiner 400 are changed 180 degrees with respect to either one of the surfaces (the first main body surface 221 or the second main body surface 222) of the optical unit main body 210. The respective positions of attachment of the projection unit 300 and the combiner 400 with respect to the optical unit main body 210 can be changed, and the respective positions of attachment of the projection unit 300 and the combiner 400 with respect to the first attachment surface 115 (or the second attachment surface 117) of the substrate housing portion 100 can be changed.

If the projection unit 300 and the combiner 400 are attached while the respective positions of attachment are changed 180 degrees with respect to the optical unit main body 210, the direction of an image (virtual image) that is visually recognized on the combiner 400 may change 180 degrees compared to the direction before the change of the attachment. In the head up display 10, the circuit substrate 111 outputs an image signal in which the direction of an image is changed from the direction before the change of the attachment, by detection of the respective attachment positions and directions of the projection unit 300 and the combiner 400 or by setting made by the driver via an operation unit such as a remote controller or the like.

For example, in the head up display 10 attached as shown in Fig. 11, by changing the direction of an image output at an attachment position where the projection port 301 of the projection unit 300 is on the side of the first main body surface 221 and the direction of an image output at an attachment position where the projection port 301 of the projection unit 300 is on the side of the second main body surface 222 by 180 degrees from each other, an image of the same direction can be visually recognized even when the attachment position of the projection unit 300 with respect to the optical unit main body 210 is changed 180 degrees.

With this, the image display element 240 changes the direction of an image (upward and downward and leftward and rightward by 180 degrees or the like) according to the attachment position of the projection unit 300 so as to output the image, and the driver can thus visually recognize the image (virtual image) even when the attachment position is changed.

Also, even when the head up display 10 is attached to a left steering wheel vehicle, the rotation surface of the hinge 113 is located at a position where the rotation surface does not cross the rear-view mirror 600 in the same way as in the case shown in Fig. 8. Therefore, the optical unit 200 and the combiner 400 can be rotated in an integral manner without coming into contact with the rear-view mirror 600 while the substrate housing portion 100 is fixed to the rear-view mirror 600.

### [Rear-view mirror attachment member]

A detailed description is now given regarding the attachment member 500 for attaching the head up display 10 to the rear-view mirror 600. Fig. 14 illustrates the attachment member 500 for attaching the head up display 10 to the rear-view mirror 600. As shown in the figure, the attachment member 500 has a pair of holding portions 590 fixed to the rear-view mirror 600 in such a manner that the holding portions 590 hold the rear-view mirror 600, and an attachment plate 581 for attaching the pair of holding portions 590 and the substrate housing portion 100. The holding portions 590 has two lower side holding mechanism portions 591 having a hook portion that is slidable in forward and backward directions in order to hold a lower end portion of the rear-view mirror 600, two upper side holding mechanism portions 592 having a hook portion that is slidable in the forward and backward directions in order to hold an upper end portion of the rear-view mirror 600, a height adjusting portion 593 that is slidable in the upward and downward directions in order to hold the rear-view mirror 600 in the upward and downward directions from behind, and a position adjustment groove 594, which is a long hole for performing position adjustment on the holding portions 590 of the attachment plate 581, on the upper surface on which the attachment plate 581 is to be placed. The attachment plate 581 is placed on the respective upper surfaces of the pair of the holding portions 590 across the upper surfaces and is attached while a pair of projections 584 is engaged with the position adjustment groove 594.

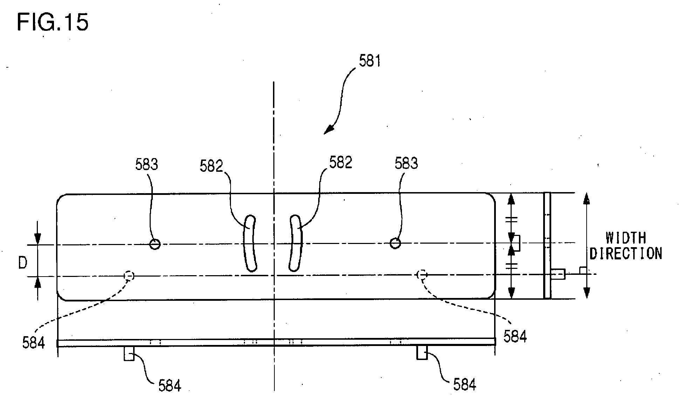

Fig. 15 is a trihedral figure of the attachment plate 581 of the attachment member 500 shown in Fig. 14. As shown in this figure, the attachment plate 581 is formed of an approximately rectangular plate-like member as a whole, and a flat surface that is an attachment surface is provided with circular arc holes 582, which are a pair of circular-arc shaped holes of different directions, central holes 583, which are a pair of holes formed at respective central positions of circles on which the respective circular arcs of the circular arc holes 582 are based, and the projections 584 on the back side for allowing the attachment plate 581 to be slidable in the longitudinal direction of the position adjustment groove 594 by attaching the attachment plate 581 to the holding portions 590 such that the projections 584 become engaged with the position adjustment groove 594 formed on the holding portions 590.

The central holes 583 are provided in the center of a width direction, which is a direction that is perpendicular to a straight line that connects the pair of projections of the attachment plate 581. On the other hand, the pair of projections 584 are not attached in the center of the width direction described previously but are placed at a position that is apart from the center by a certain distance (offset D) in the width direction. With this, a sliding range can be changed to be widely different in a first state where the attachment plate 581 is attached such that the projections 584 are located closer to the height adjusting portion 593 than to the respective central holes 583 and a second state where the attachment plate 581 is used while switching two ends thereof located in the width direction with each other by rotating the attachment plate 581 by 180 degrees using a direction perpendicular to the surface of the attachment plate 581 as an axis from the first state while the pair of projections 584 are facing downward, and an adjustable range of the position of the substrate housing portion 100 can thus be increased. Note that the second state is a state where the attachment plate 581 is attached such that the projections 584 are located farther away from the height adjusting portion 593 than from the respective central holes 583. Since a distance between a rear-view mirror 600 and a windshield (a front windshield) of a vehicle varies depending on the type of the vehicle, by arranging a pair of projections 584 away from the center by the offset D, the degree of freedom of a position in the forward and backward directions at which a head up display 10 is fixed with respect to the rear-view mirror 600 is increased, and the head up display 10 can thus be installed in various vehicles. Also, by providing a plurality of holding portions 590 (a pair in the case of the present embodiment), the head up display 10 can be installed in even more variety of vehicles.

Regarding a distance between the pair of holding portions 590, the pair of holding portions 590 can be arranged such that a distance between the two position adjustment grooves 594 is the same as a distance between the two projections 584 of the attachment plate 581. Alternatively, the pair of holding portions 590 can be arranged such that the distance between the two position adjustment grooves 594 becomes shorter than the distance between the two projections 584. Since the distance between the pair of projections 584 does not change, the attachment plate 581 is consequently attached in an oblique manner with this arrangement, and the attachment plate 581 can thus be attached with an angle changed with respect to the longitudinal direction of the position adjustment grooves 594. In other words, the attachment plate 581 and the substrate housing portion 100 can be attached at an angle by rotating the attachment plate 581 and the substrate housing portion 100 along a plane on the attachment plate 581. As described, by providing a plurality of holding portions 590 (a pair in the case of the present embodiment) and adjusting respective distances between the plurality of holding portions 590, even more variety of positions for attachment are possible.

When attaching the substrate housing portion 100, a surface of the attachment plate 581 (a surface on which the projections 584 are not provided) and the first attachment surface or the second attachment surface of the substrate housing portion 100 are arranged overlapping with each other, and setscrews 118 (fixing members) are inserted through a circular arc hole 582 and a central hole 583 located in the center of a circular arc of the circular arc hole 582 so as to fix the substrate housing portion 100 by screwing. At the time of screwing, the substrate housing portion 100 is movable around the central hole 583 on the surface of the attachment plate 581, and the direction of the substrate housing portion 100 obtained while a normal to the surface of the attachment plate 581 is used as an rotation axis is adjusted. Since the substrate housing portion 100, the optical unit 200, and the combiner 400 are rotated in an integral manner around the central hole 583 at this time, the driver can adjust an attachment angle, that is obtained while the normal to the surface of the attachment plate 581 is used as the rotation axis, to the position where the driver can visually recognize an image (virtual image) displayed on the combiner 400. The central angle of the circular arc of the circular arc hole 582 is set to be in a range that is sufficient for the driver to adjust the attachment angle to the position where the driver can visually recognize an image (virtual image) displayed on the combiner 400. Also, the central angle of the circular arc of the circular arc hole 582 is more preferably set to be in a range where the combiner 400 does not come in contact with the windshield.

Given that the center direction of the circular arc of the circular arc hole 582 is referred to as an inner side and that the direction opposite to the center direction of the circular arc is referred to as an outer side, the pair of the circular arc holes 582 are arranged in such a manner that the respective inner sides thereof face to each other in the present embodiment. However, depending on a position where the substrate housing portion 100 is fastened by a setscrew, the pair of the circular arc holes 582 may be arranged in such a manner that the respective outer sides thereof face to each other.

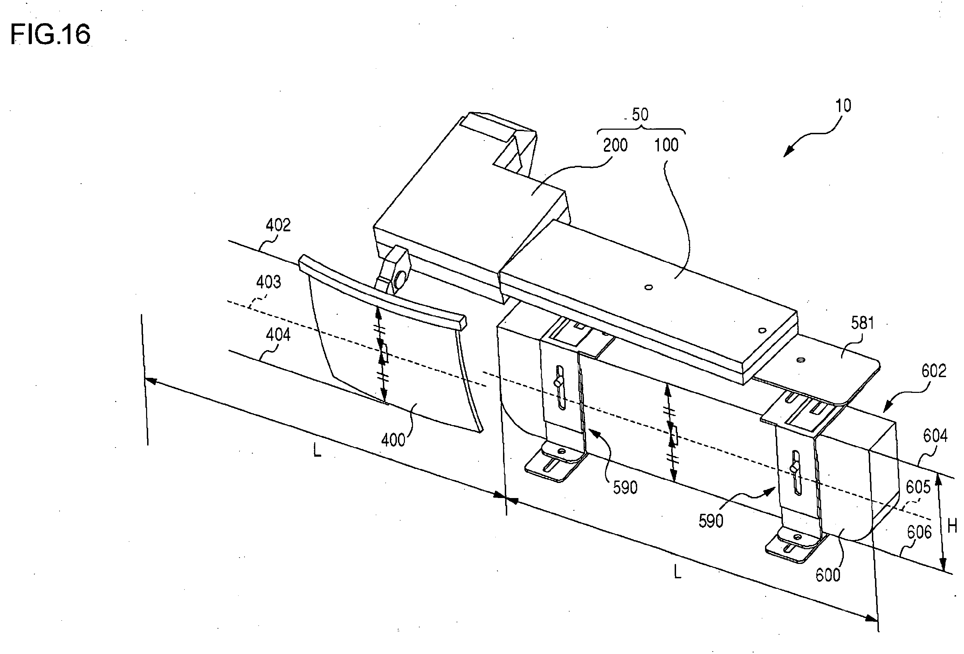

Fig. 16 illustrates the head up display 10 attached to the rear-view mirror 600. The holding portions 590 of the attachment member 500 each hold the upper end and the lower end of the rear-view mirror 600 from the back surface (surface with no mirror in this case) of the rear-view mirror 600 at two parts, and the attachment plate 581 is attached such that the position thereof in the longitudinal direction of the position adjustment grooves 594, which is mainly a direction perpendicular to the mirror surface of the rear-view mirror 600, by the projections 584 being engaged with the respective position adjustment grooves 594 formed on the upper side holding mechanism portions 592 of the respective holding portions 590. Also, the attachment plate 581 is fixed such that an angle thereof obtained while the normal to the surface of the attachment plate 581 is used as a rotation axis is adjustable.

Subsequently, an explanation is given using Fig. 16 regarding a relationship between the position of the rear-view mirror 600 and the position of the combiner 400. The explanation is given on the assumption that the longitudinal direction of the rear-view mirror 600 is parallel to a horizontal plane and that the mirror surface is perpendicular to the horizontal plane. Also, a line that passes through the center of the rear-view mirror 600 in the upward and downward directions and that is parallel to the transverse direction of the rear-view mirror 600 is referred to as a rear-view mirror center line 605. Also, a line that passes through the center of the combiner 400 in the upward and downward directions and that is parallel to the transverse direction of the combiner 400 is referred to as a combiner center line 403. In the present embodiment, the observation angle of the combiner 400 is adjustable, and the relative height of the combiner 400 with respect to the height of the rear-view mirror 600 changes with the adjustment of the observation angle of the combiner 400. The relative heights of the combiner 400 and the rear-view mirror 600 can be also said to be a difference between the height of the combiner center line 403 and the height of the rear-view mirror center line 605. For example, if the combiner center line 403 is located at a position higher than the rear-view mirror center line 605, it can be considered that the combiner 400 is located at a position relatively higher than the rear-view mirror 600. Also, the position condition of the combiner 400 explained in the following is preferably satisfied at all positions of the combiner 400 in a usage state (a state where an image projected can be visually recognized by the user). In other words, although the position condition is preferably satisfied at all possible observation angles of the combiner 400, a sufficient effect can be achieved at least as long as the position condition is satisfied when the combiner 400 has an average height of the possible relative height of the combiner 400 with respect to the height of the rear-view mirror 600. For example, if the relative height of the combiner 400 with respect to the height of the rear-view mirror 600 is adjustable from a position where the combiner center line 403 is higher than the rear-viewmirror center line 605 by 5 cm to a position where the combiner center line 403 is lower than the rear-view mirror center line 605 by 5 cm, the position condition needs to be satisfied when the combiner center line 403 and the rear-view mirror center line 605 have the same height. Also, in a case of a configuration where the relative height of the combiner 400 with respect to the height of the rear-view mirror 600 is fixed by screwing or the like such that the relative height cannot be adjusted, in other words, in a case of a configuration where the relative height of the combiner 400 with respect to the height of the rear-viewmirror 600 is fixed (such that the relative height is uniquely determined) with the attachment of the head up display 10 to the rear-view mirror 600 of a vehicle, the position condition of the combiner 400 explained in the following needs to be satisfied at the position where the relative height is fixed. As shown in Fig. 16, the rear-viewmirror 600 has a length L in the transverse direction (the longitudinal direction) and a height H in the upward and downward directions.

First, an explanation is given regarding a preferred position condition of the combiner 400. In the present embodiment, an upper end 402 of the combiner 400 in the usage state is located higher than the rear-view mirror center line 605 of the rear-view mirror 600, and a lower end 404 of the combiner 400 is located lower than the rear-view mirror center line 605 of the rear-view mirror 600. By attaching the head up display 10 to the rear-view mirror 600 and by achieving an attachment structure where the combiner 400 is placed at such a position, the head up display 10 can be installed at an optimal position with a small displacement of a viewpoint at the time of viewing a display image.

Further, a configuration may be employed that allows the combiner center line 403 of the combiner 400 in the usage state has almost the same height as the rear-view mirror center line 605. By attaching the head up display 10 to the rear-view mirror 600 and by achieving an attachment structure where the combiner 400 is placed at such a position, the head up display 10 can be installed at an optimal position with an even smaller displacement of a viewpoint at the time of viewing a display image.

Also, regarding a case where the height of the combiner 400 in the upward and downward directions is larger than the height H of the rear-view mirror 600 in the upward and downward directions, a configuration may be employed where the upper end 402 of the combiner 400 in the usage state is located higher than the upper end 604 of the rear-view mirror 600 and where the lower end 404 of the combiner 400 is located lower than the lower end 606 of the rear-view mirror 600. By attaching the head up display 10 to the rear-view mirror 600 and by achieving an attachment structure where the combiner 400 is placed at such a position, the head up display 10 can be installed at an optimal position with an even smaller displacement of a viewpoint at the time of viewing a display image.

Such a position shown in the present embodiment is optimal. However, at least as long as the upper end 402 of the combiner 400 in the usage state is located higher than the lower end 606 of the rear-view mirror 600 or the lower end 404 of the combiner 400 is located lower than the upper end 604 of the rear-view mirror 600, the head up display 10 can be installed at a preferred position with a small displacement of a viewpoint at the time of viewing a display image. In the present embodiment, a state where the combiner 400 is at the lateral side of the rear-view mirror 600 needs to be a state where the position of the combiner 400 in the transverse direction is a position that allows a display image to be visually recognized from a seat of the vehicle while satisfying a condition for exerting this above-described effect. In other words, it is only necessary that a display image projected on the combiner 400 is not blocked by the rear-view mirror 600.

In addition to the above-described position condition, the position of the combiner 400 in the transverse direction is more preferably arranged in a range of up to the length L of the rear-view mirror 600 from an end in the transverse direction (lateral end) of the rear-viewmirror 600 since the rear-viewmirror 600 and the combiner 400 are not too far away from each other with a small displacement of a viewpoint.

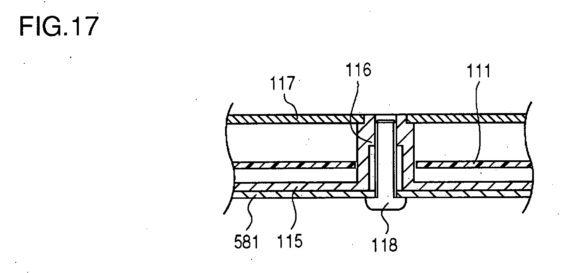

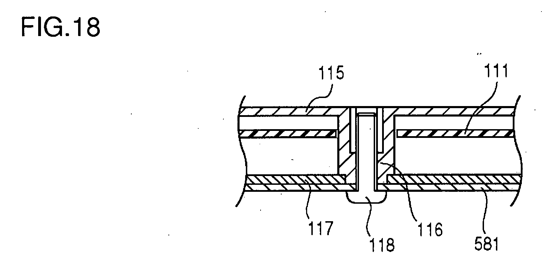

Fig. 17 is a cross-sectional view of a portion including a setscrew 118 when the first attachment surface 115 of the substrate housing portion 100 is attached such that the first attachment surface 115 is in contact with the attachment plate 581. Fig. 18 is a cross-sectional view of a portion including a setscrew 118 when the second attachment surface 117 of the substrate housing portion 100 is attached such that the second attachment surface 117 is in contact with the attachment plate 581. In general, a space between the upper side of the rear-view mirror 600 and a ceiling is extremely small. Thus, a setscrew 118 is tighten only from below for a case where the first attachment surface 115 is in contact with the attachment plate 581 and for a case where the second attachment surface 117 is in contact with the attachment plate 581. Also, since the substrate housing portion 100 is designed to be as thin as possible, the circuit substrate 111 has a through hole at a fixing position by the setscrew 118, allowing for fixation by a longer screw. An insert nut 116, which is a fixing member engagement unit that extends to the second attachment surface 117, is formed on the first attachment surface 115, and a through hole is formed at a corresponding position on the second attachment surface 117. Thus, the setscrew 118 is fixed in engagement with the same insert nut 116 for a case where the first attachment surface 115 is in contact with the attachment plate 581 and for a case where the second attachment surface 117 is in contact with the attachment plate 581. Therefore, the substrate housing portion 100 can be installed even in a small area between the rear-view mirror 600 of the vehicle and the ceiling. Therefore, the position and the angle can be adjusted in a space-saving manner in the head up display 10 according to the present embodiment.

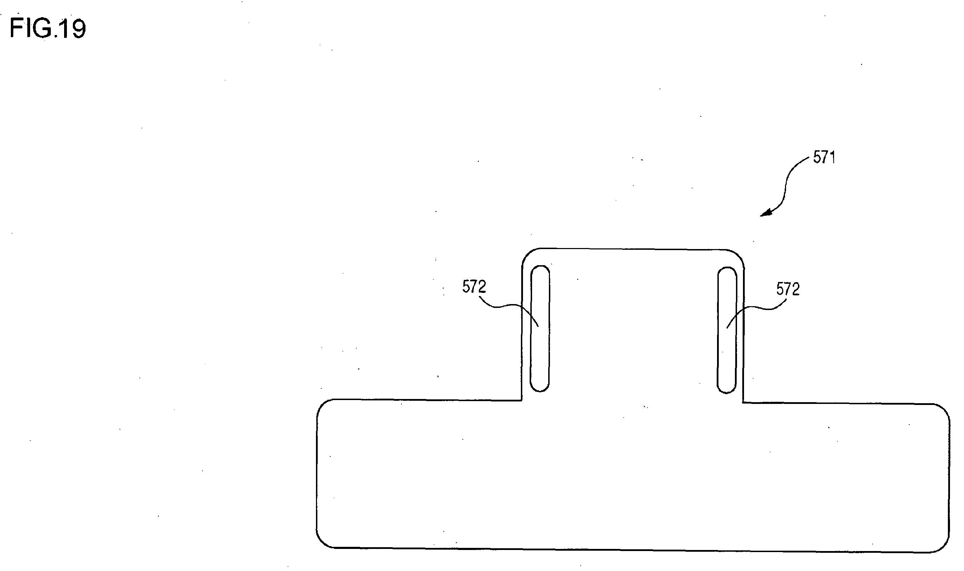

Fig. 19 illustrates an attachment plate 571, which is an exemplary variation of the attachment plate 581. The attachment plate 571 has a pair of linear straight-line hole portions 572 that extend in one direction, which are used when attaching the substrate housing portion 100. Setscrews 118 are inserted through both of the straight-line hole portions 572 even when an attachment surface of the attachment plate 571 faces an attachment surface of either of the first attachment surface 115 and the second attachment surface 117 of the substrate housing portion 100. In the attachment plate 571, by attaching the substrate housing portion 100 while changing respective attachment positions in the longitudinal direction of both of the pair of the straight-line hole portions 572, the position of the substrate housing portion 100 in the longitudinal direction can be adjusted. In this case, each hole of the straight-line hole portions 572 is formed to have a width that is sufficiently larger than the screw diameter of a setscrew 118. With this, the direction of the substrate housing portion 100 with the normal to the surface of the attachment plate 581 of the substrate housing portion 100 being used as an rotation axis can be adjusted by changing one of the attachment positions in the longitudinal direction of the pair of the straight-line hole portions 572. The respective lengths and widths of the straight-line hole portions 572 are determined in a range where the combiner 400 does not come in contact with the windshield.

As described, although a pair of long holes that are circular-arc shaped are used in the case of above-described attachment plate 581, the direction of the substrate housing portion 100 can be freely adjusted even when a pair of linear long holes are used as in the case of the attachment plate 571, which is an exemplary variation of the attachment plate 581. In modes explained using Figs. 14 through 19, examples are shown where the substrate housing portion 100 and the optical unit 200 are formed separately. However, the same can apply even for an image generation unit 50 (Fig. 16) where the substrate housing portion 100 and the optical unit 200 are not formed separately. In the modes explained using Figs. 14 through 19, two position adjustment grooves 594 are used. Alternatively, one or more grooves having a function of a position adjustment may be used.

### [Combiner storage]

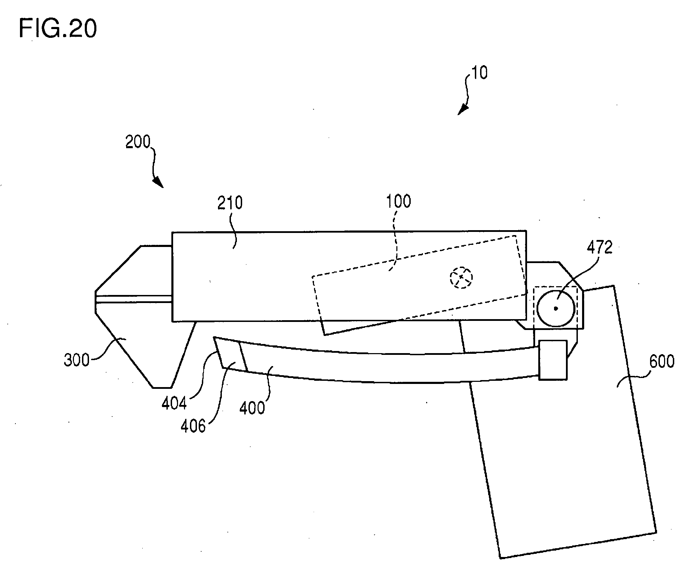

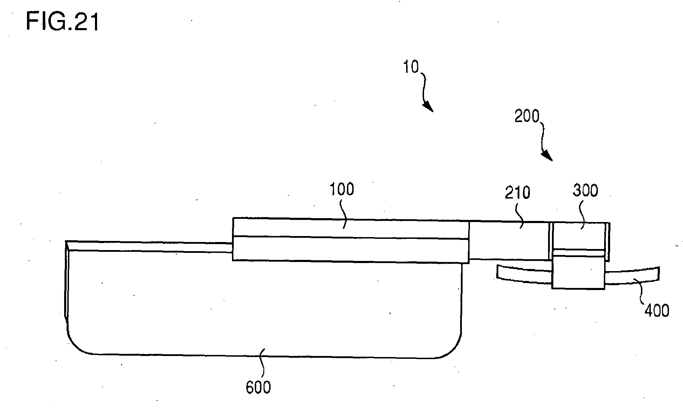

Figs. 20 and 21 are a lateral view and a front view showing a state where the combiner 400 is placed at a storage position by a storage hinge 472, respectively. As shown in Figs. 20 and 21, the combiner 400 is rotated by the storage hinge 472, which is a rotating unit of the combiner 400, for storage so as to face a housing surface of the optical unit 200, i.e., a housing surface of the optical unit main body 210 such that, f or example, the combiner 400 overlaps the housing surface. In this case, the projection unit 300 is located on an opposite side from a side on which the combiner 400 is attached across the housing surface, and a length from the rotation center of the storage hinge 472 to the lower end 404, which is an end of the combiner 400 that is the farthest from the rotation center, is shorter than the length of the optical unit main body 210. The lower end 404 is located more to the side of the storage hinge 472 than the projection unit 300. Also, the height of the optical unit main body 210 from the housing surface is shorter than the height of the projection unit 300 from the housing surface. Therefore, when the head up display 10 is not being used, by storing the combiner 400 by the storage hinge 472, the combiner 400 can be placed at a position where the combiner 400 does not give a feeling of oppression to the driver compared to when the combiner 400 is being used (a position where the combiner 400 does not come into the driver's field of vision compared to when the combiner 400 is being used). Also, by storing the combiner 400 by rotating the combiner 400 using the storage hinge 472, sunlight can be prevented by the ceiling of the vehicle and the optical unit main body 210, and the deterioration of the combiner 400 can thus be prevented. Further, the storage hinge 472 stops at an angle formed when the combiner 400 is used. Thus, when start using the combiner 400 again after storing the combiner 400 by rotating the combiner 400 by the storage hinge 472, the driver can start using the combiner 400 without adjusting the position again. Transparent rubber 406 may be attached at a corner portion on the side of the lower end 404 of the combiner 400. Even when the combiner 400 is stored by the storage hinge 472 by picking the rubber 406, adhesion of dirt or the like to the combiner 400 can be prevented. Being transparent, the rubber 406 hardly blocks the field of view of the driver.

The attachment is made on the back side of the rear-view mirror 600. Alternatively, the attachment may be made to a post of the rear-view mirror 600 or may be made on the front side, which is the mirror surface 602. In this case, an alternative mirror may be placed on a surface of the display device for vehicle at a position corresponding to the mirror surface 602.

Also, in the above-described embodiment, as long as the rear-view mirror 600 is a mirror that can be used to check behind the vehicle in the vehicle, the position or the like of the mirror inside the vehicle is not limited. Also, the head up display 10 is attached to the rear-view mirror 600. Alternatively, the head up display 10 may be placed on the dashboard for use. A display device for vehicle may be realized by placing a display device such as a liquid crystal display device or an organic EL display device at the position of the combiner 400.

### [DESCRIPTION OF THE REFERENCE NUMERALS]

10 head up display, 50 image generation unit, 100 substrate housing portion, 111 circuit substrate, 112 substrate housing side opening, 113 hinge, 114 rotation lock mechanism, 115 first attachment surface, 116insert nut, 117 second attachment surface, 118 setscrew, 200 optical unit, 210 optical unit main body, 212 reference surface, 221 first main body surface, 222 second main body surface, 231 light source, 232 collimate lens, 233 UV-IR cut filter, 234 polarizer, 235 fly-eye lens, 236 reflecting mirror, 237 field lens, 238 wire grid polarization beam splitter, 239 quarter-wave plate, 240 image display element, 241 analyzer, 242 projection lens group, 243 heat sink, 245 optical system placement unit, 246 flexible cable, 247 optical unit side opening, 248 space, 300 projection unit, 301 projection port, 320 projection axis, 351 first projection mirror, 352 second projection mirror, 360 intermediate image screen, 400 combiner, 402 upper end, 404 lower end, 406 rubber, 450 virtual image, 472 storage hinge, 500 attachment member, 571 attachment plate, 572 straight-line hole portion, 581 attachment plate, 582 circular arc hole, 583 central hole, 584 projection, 590 holding portion, 591 lower side holding mechanism portion, 592 upper side holding mechanism portion, 593 height adjusting portion, 594 position adjustment groove, 600 rear-view mirror, 602 mirror surface, 604 upper end, 606 lower end

### [INDUSTRIAL APPLICABILITY]

The present invention is applicable to a display device for a vehicle.

## Claims

1. A display device for a vehicle (10) comprising:
a substrate housing portion (100) that stores a circuit substrate (111) that outputs an image signal of an image to be displayed;
an optical unit (200) that is provided at one end of the substrate housing portion (100) and that generates and projects an image based on the image signal output from the circuit substrate (111); and
a combiner (400) that is provided at one end of the optical unit (200) and on which the image is projected,
wherein the optical unit (200) has:
an optical unit main body (210) that includes a light source (231) and an image display element (240); and
a projection unit (300) that is attached to the optical unit main body (210), that includes a projection mirror and an intermediate image screen (360) that forms a real image, and that determines a projection direction,
wherein the optical unit main body (210) has a first main body surface (221) and a second main body surface (222), which is a surface facing the first main body surface (221), and
**characterized in that** the projection unit (300) has two arrangement states: a first state where a projection port (301) of the projection unit (300) is on the side of the first main body surface (221); and a second state where the projection port (301) is on the side of the second main body surface (222).

2. The display device for a vehicle (10) according to claim 1,
wherein the projection unit (300) and the combiner (400) are each detachably attached to the optical unit main body (210) .

3. The display device for a vehicle (10) according to claim 1 or claim 2,
wherein the image display element (240) outputs an image according to the position of the projection port (301).

4. The display device for a vehicle (10) according to any one of claim 1 through claim 3,
wherein the substrate housing portion (100) has a first attachment surface (115) on the same side as the first main body surface (221) and has a second attachment surface (117), which is a surface facing the first attachment surface (115).

5. The display device for a vehicle (10) according to claim 4,
wherein the first attachment surface (115) or the second attachment surface (117) is attached to a rear-view mirror (600) inside the vehicle using an attachment member (500).

## Patentansprüche

1. Anzeigevorrichtung für ein Fahrzeug (10), welche Folgendes aufweist:
einen Substrataufnahmeteil (100), der ein Schaltungssubstrat (111) aufnimmt, welches ein Bildsignal eines anzuzeigenden Bildes ausgibt;
eine optische Einheit (200), die an einem Ende des Substratgehäuseteils (100) vorgesehen ist und ein Bild basierend auf dem Bildsignal, welches aus dem Schaltungssubstrat (111) ausgegeben wurden, erzeugt und projiziert; und
ein Kombinierungselement (400), welches an einem Ende der optischen Einheit (200) vorgesehen ist und auf welches das Bild projiziert wird, wobei die optische Einheit (200) Folgendes aufweist:
einen Hauptkörper (210) der optischen Einheit, der eine Lichtquelle (231) und ein Bildanzeigeelement (240) aufweist; und
eine Projektionseinheit (300), die an dem Hauptkörper (210) der optischen Einheit angebracht ist, die einen Projektionsspiegel und einen Zwischenbildschirm (360) aufweist, der ein reales Bild formt, und der eine Projektionsrichtung bestimmt,
wobei der Hauptkörper (210) der optischen Einheit eine erste Hauptkörperfläche (221) und eine zweite Hauptkörperfläche (222) hat, die eine Oberfläche ist, die zur ersten Hauptkörperfläche (221) weist, und
**dadurch gekennzeichnet, dass** die Projektionseinheit (300) zwei Anordnungszustände hat:
einen ersten Zustand, in dem ein Projektionsteil (301) der Projektionseinheit (300) auf der Seite der ersten Hauptkörperfläche (221) ist; und
einen zweiten Zustand, wo der Projektionsanschluss (301) auf der Seite der zweiten Hauptkörperfläche (222) ist.

2. Anzeigevorrichtung für ein Fahrzeug (10) nach Anspruch 1, wobei die Projektionseinheit (300) und das Kombinationselement (400) entfernbar an dem Hauptkörper (210) der optischen Einheit angebracht sind.

3. Anzeigevorrichtung für ein Fahrzeug (10) nach Anspruch 1 oder Anspruch 2, wobei das Bildanzeigeelement (240) ein Bild gemäß der Position des Projektionsanschlusses (301) ausgibt.

4. Anzeigevorrichtung für ein Fahrzeug (10) nach einem der Ansprüche 1 bis 3, wobei der Substrataufnahmeteil (100) eine erste Befestigungsfläche (115) auf der gleichen Seite wie die erste Hauptkörperfläche (221) hat und eine zweite Befestigungsfläche (117) hat, die eine Oberfläche ist, die zur ersten Befestigungsfläche (115) weist.

5. Anzeigevorrichtung für ein Fahrzeug (10) nach Anspruch 4, wobei die erste Befestigungsfläche (115) oder die zweite Befestigungsfläche (117) an einem Rückspiegel (600) in dem Fahrzeug unter Verwendung eines Befestigungsgliedes (500) angebracht ist.

## Revendications

1. Dispositif d'affichage pour un véhicule (10) comprenant :
une portion abritant un substrat (100) qui contient un substrat de circuit (111) qui fournit un signal d'image d'une image à afficher ;
un module optique (200) qui est prévu au niveau d'une extrémité de la portion abritant un substrat (100) et qui génère et projette une image sur la base du signal d'image fourni par le substrat de circuit (111) ; et
un dispositif de combinaison (400) qui est prévu au niveau d'une extrémité du module optique (200) et sur lequel l'image est projetée,
dans lequel le module optique (200) comporte :
un corps principal de module optique (210) qui comprend une source de lumière (231) et un élément d'affichage d'image (240) ; et
un module de projection (300) qui est fixé au corps principal de module optique (210), qui comprend un miroir de projection et un écran d'image intermédiaire (360) qui forme une image réelle, et qui détermine une direction de projection,
dans lequel le corps principal de module optique (210) comporte une première surface de corps principal (221) et une deuxième surface de corps principal (222), qui est une surface opposée à la première surface de corps principal (221), et
**caractérisé en ce que** le module de projection (300) comporte deux états d'agencement : un premier état dans lequel un port de projection (301) du module de projection (300) est sur le côté de la première surface de corps principal (221) ; et un deuxième état dans lequel le port de projection (301) est sur le côté de la deuxième surface de corps principal (222).

2. Dispositif d'affichage pour un véhicule (10) selon la revendication 1,
dans lequel chacun du module de projection (300) et du dispositif de combinaison (400) peut être fixé de façon amovible au corps principal de module optique (210).

3. Dispositif d'affichage pour un véhicule (10) selon la revendication 1 ou 2,
dans lequel l'élément d'affichage d'image (240) fournit une image en fonction de la position du port de projection (301).

4. Dispositif d'affichage pour un véhicule (10) selon l'une quelconque des revendications 1 à 3,
dans lequel la portion abritant un substrat (100) comporte une première surface de fixation (115) sur le même côté que la première surface de corps principal (221) et comporte une deuxième surface de fixation (117), qui est une surface opposée à la première surface de fixation (115).

5. Dispositif d'affichage pour un véhicule (10) selon la revendication 4,
dans lequel la première surface de fixation (115) ou la deuxième surface de fixation (117) est fixée à un rétroviseur (600) à l'intérieur du véhicule en utilisant un élément de fixation (500).
